# EUROPEAN PATENT SPECIFICATION

(11) **EP 1 781 047 B1**
(45) Date of publication and mention of the grant of the patent: **15.10.2008**
(21) Application number: 06425737.1
(22) Date of filing: 25.10.2006
(51) Int. Cl.: H04Q 1/14

(54) **Telephone line termination module**
Telefonleitungsabschlussmodul
Module de terminaison de ligne téléphonique

(30) Priority: 26.10.2005 IT RM20050528; 24.07.2006 IT RM20060394
(43) Date of publication of application: 02.05.2007
(73) Proprietor: C.I.S. Sud s.r.l., 00040 Ariccia (RM) (IT)
(72) Inventor: Bernardini, Giuseppe, 00040 Ariccia (RM) (IT)
(74) Representative: Santi, Filippo

(56) References cited:
- WO-A2-02/076109
- DE-A1- 2 048 144
- DE-U1-8202005 003 87

## Description

The present invention concerns a termination module for couples of semiconductors, in particular an IDC strip.

The invention relates to the field of telecommunication applications and in particular to the field of telephone communications and specifically refers to the termination of copper telephonic cables.

More in particular, the present invention relates to an IDC strip for circuits made of copper and/or the so called telephone couples, terminating each telephone private line, designed so to allow its use in optimal conditions, even in case of application of transmission signals at particularly high frequency.

As it is known, a telephone circuit, the so-called couple, is comprised of two insulated copper conductors, covered with a suitable insulating material all over their length (by means of an operation defined stranding) in order to avoid interferences with other circuits or couples placed nearby. This kind of circuit was designed and is particularly suitable to transmit a so-called "telephone channel", i.e. a simple signal transmission and/or the voice conversation of two users. During such use, the frequency spectrum going through the circuit is approximately 3000 Hz.

The stranding of circuit conductors, continuosly changing the direction of the electromagnetic field of the transmission signal and therefore its external coupling relative effect, also makes possible to transmit using the same technique, on the same physical carrier, a higher number of information, overcoming the frequency of 3000 Hz. By increasing the frequency going through the circuit, the physical carrier behaves no more as a transmission circuit, rather as an antenna, involving through interference (cross talk) all other circuits nearby.

The growing need for using the same circuit to transmit a higher and higher amount of information led during the last years every manufacturer of transmitting apparatuses to develop technologies that, using numerical transmission systems and treating the different complex signals by cutting, compressing and regenerating them, would allow to build high transmission capacity apparatuses that can still use the copper telephone couple.

At present, such a need became even more urgent, since it is required to transmit video signals too on the same physical carrier, by using frequencies even higher, up to a band of 5000000 Hz.

In these difficult conditions of utilization of the couple, it is necessary to take account of and remove all the areas of the circuit where whatever interference is still possible.

According to the prior art, the telephone electric circuit (a couple of conductors) linking each single user to the telephone main station, starts from the single user's location and is conveyed in telephonic cables, terminating in the main station in correspondence of termination modules, called IDC strips (this initials standing for the English wording "insulation displacement connection", standing for a particular kind of connection with insulating dislocation) and from here the couple of conductors, also defined permutation, arrives at the station's transmission apparatuses. IDC strips, therefore, are useful to connect and/or disconnect single users and station's apparatuses.

At present, IDC strips commonly on sale are divided in subunits, called packets, for terminating a plurality of couples, said packets being located one upon the other so to realise a termination module. The number of couples for each packet and the number of packets for each IDC strip can vary. As an example, with eight couples for each packet and twelve packets for each strip a module of ninety couples is obtained.

In IDC strips, the circuit of the couples runs inside the termination module without stranding. In fact, due to construction needs, insulated conductors constituting the circuits run alone through the caves of the termination module, representing the obliged paths of termination of conductors.

If it is desired that each main station connets thousands of users, it can be understood that the number of strips of this kind used in a main station is huge, and it can be understood why said strips are installed inside the main station on suitable frames of standard dimensions for all the kinds of strip, the number of these frames being such to characterise the internal architecture of the environment. It is evident that, if a precise and ordered construction of the complex-product allowing for a regular installation is not achieved, all will be in disorder.

Further, even if the path inside the strips stranding free and consequently the zone of interference is relatively short, this makes the use of the IDC strips unacceptable for applications requiring high utilisation frequencies such as those needed for the transmission of video signals, in presence of a high number of couples of conductors, in consequence of the high values of cross talk generated in such conditions.

In these conditions, the aim pursued in the development of the present invention is to increase the capacity of terminated couples and therefore to contrast the natural tendency to increase the dimensions in width of the strip, keeping identical metallic contacts for all kinds of strip and conferring an adequate shielding of the circuits.

According to the prior art, normally on the left side of each strip the cable coming from the single telephone private line is connected, while on the right side the permutations coming from the main station are realised. The permutations can be modified and/or substituted even after the first installation and it is thus necessary that enough room for acceding for operationg among the strips located in adjacent position is provided. Further, the same packets constituting each strip have to be mechanically fixed to each other in a firm way.

The known IDC terminations having ninety-six couples, and more in general IDC strips having a great number of couples, have many packing mechanical problems making the installation precarious over the time and dimensions in width too big for the following maintainance interventions on the permutations.

According to WO 02/076109 A2 it is disclosed a termination module for couples of semiconductors, in particular an IDC strip, comprising at least a packet body, placed on a support base and covered by a box-lid, on which a plurality di of connection fly springs are placed, the cables of the conductors coming from the telephone private lines and the cables coming from the main station entering the module from opposed side of each packet body and being led, through a plurality of obliged paths, towards the front portion of said packet body, in correspondence of a slot of each of said fly springs for the connection of the conductor.

According to DE 20 2005 003 878 U1 it is disclosed a termination module wherein metallisation of the wire guiding elements is provided.

The purpose of the IDC strip according to the present invention is to solve all the abovementioned problems by making easy the installation and the subsequent maintenance interventions.

These and other results are achieved according to the present invention by providing for a new IDC strip wherein the lateral dimensions are reduced with respect to the strips of the prior art and wherein the different parts constituting it are realised with solutions having complimentary shapes and blocks, so to form once the assembly is mounted a single piece, in which the realisation of an electromagnetic shielding for each path is provided.

It is therefore a specific object of the present invention a termination module for couples of semiconductors, in particular an IDC strip, according to claim 1.

Further characteristics of the invention are indicated in the subsequent claims.

The present invention will now be described, for illustrative non limitative purposes, according to its preferred embodiments, with particular reference to the enclosed drawings, in which:
- figure 1 shows a perspective view of the IDC strip according to the present invention,

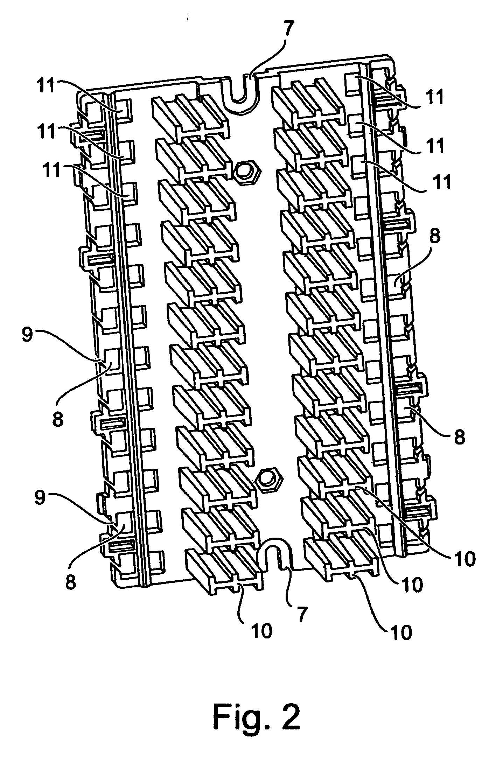

- figure 2 shows a front perspective view of the support base of the strip of figure 1,

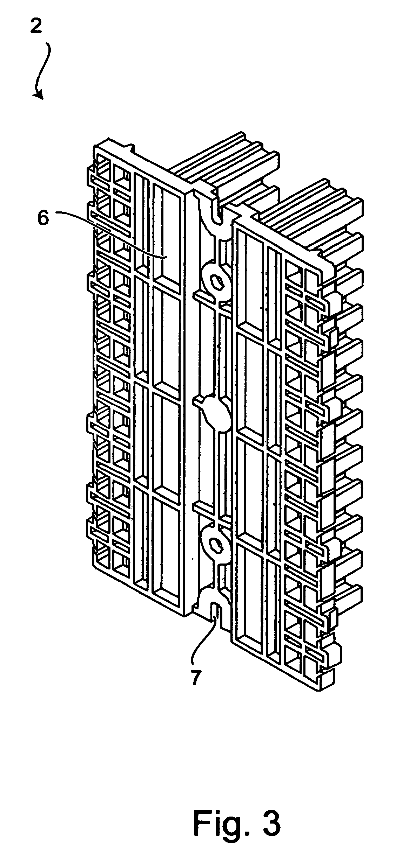

- figure 3 shows a rear perspective view of the support base of the strip of figure 1,
- figure 4 shows a front perspective view of the packet body of the strip of figure 1,
- figure 5 shows a rear perspective view of the packet body of the strip of figure 1,
- figure 6 shows a front perspective view of the packet body of the strip of figure 1, longitudinally cut to allow to see its internal portion,
- figure 7 shows a front perspective view of the box-lid of the packet body of the strip of figure 1,
- figure 8 shows a front perspective view of the packet body of the strip of figure 1, inside the respective box-lid,
- figure 9 shows a front perspective view of the support base of the strip of figure 1, on which a single packed body is applied,
- figure 10 shows a front perspective view of a connection fly spring of the strip of figure 1,
- figure 11 shows a front perspective view of a couple of connection fly springs of the strip of figure 1, and
- figure 12 shows a front perspective view of the packet body of the strip of figure 1, longitudinally cut to allow to see its internal portion, inside which a couple of connection fly springs is provided.

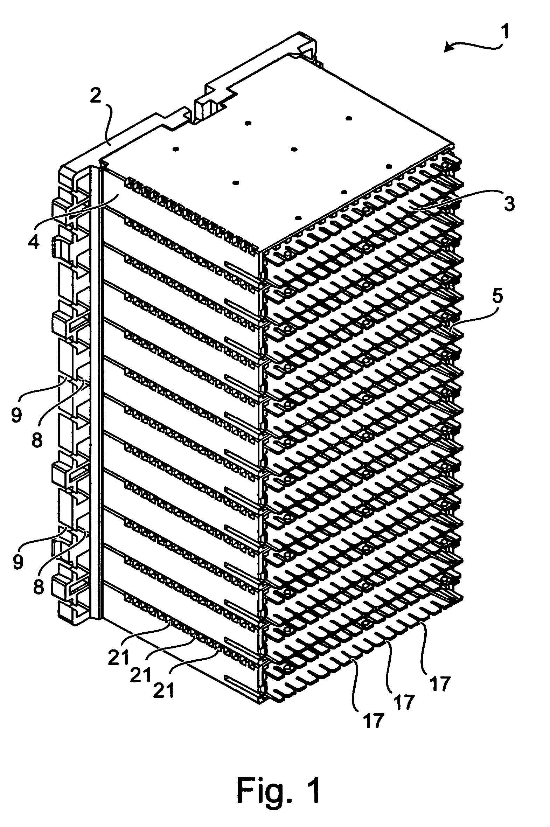

Reference being preliminarly made to figure 1, an IDC strip is shown, identified in full by the numeral reference 1, according to the present invention, provided with all the elements constituting it, but the front cases. The strip 1 is comprised of a support base 2, on which a plurality of packet bodies 3 are arranged, inside the corresponding box-lids 4. In the strip 1 shown in the figure, the front portions of the connection fly springs 5 are also visible.

Reference being made to figures,2 and 3, the support base 2, fully made from molding in plastic material, develops substantially flat and is provided, on the rear side, with stiffening ribs 6 to ensure the necessary mechanic strenght. The rear side of the support base 2 is in its entirety substantially flat, in order to lean to a frame. On the opposed upper and lower sides of the support base 2 two seats 7 for pins for fixing to the frame are provided. On the sides of the support base 2 a series of slots 8 is present, suitably shaped, for the passage of the insulated conductors of the couples. The entrance to the slots is made possible by means of passages 9.

The support base 2 is provided with a plurality of profiles 10, raised with respect to the front side, suitably shaped in order to give a good mechanic resistance to bending stress, arranged to form two vertically ordered series inside the two lateral half-portion of the support base. The profiles 10 being at the same height of each of each of the two series constitute two cantilevers for the support of each packet body 3.

Further, the support base 2 is provided with a plurality of openings 11, arranged to form two vertically ordered series going alongside the profiles 10, but placed closer to the lateral border of the support base 2. The openings 11 are realised for coupling with correspondent fixing tongues 12 provided on the rear side of each packet body 3.

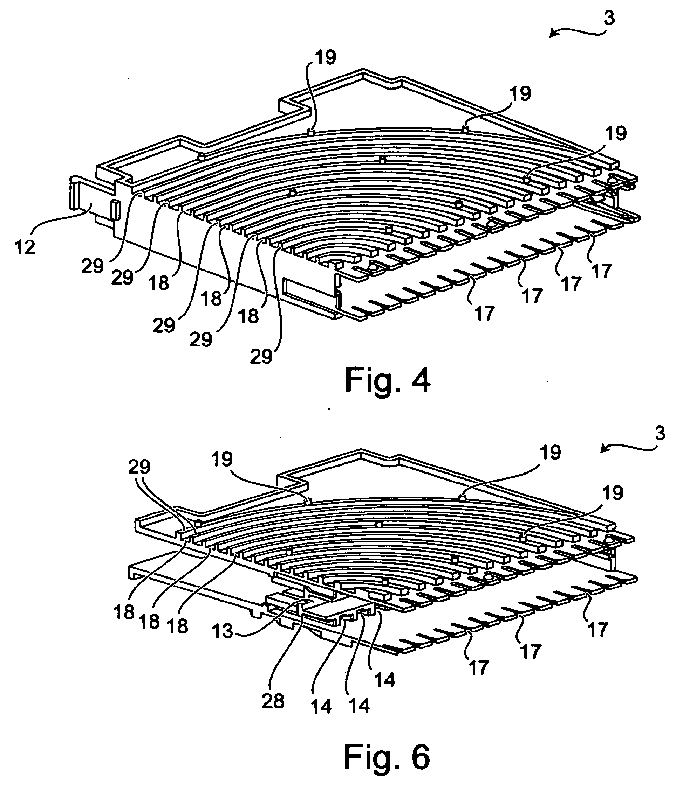

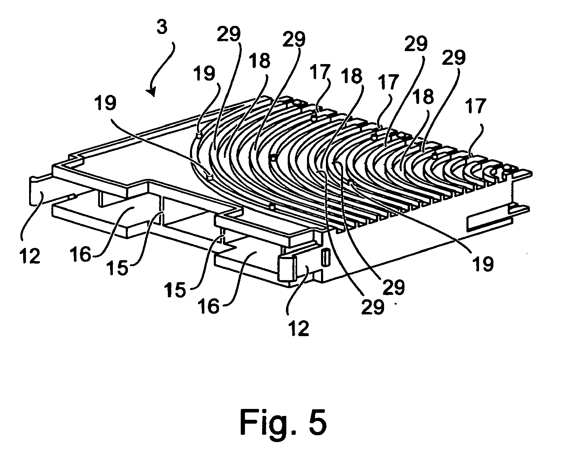

Reference being made to figures 4, 5 and 6, the packet body 3, fully made from bonding in plastic material, has a box like structure opened on the front and the rear side. Inside said packed body, in correspondence of approximately half of its depth and all along its width, a structure 13 with a plurality of seats 14 for the insertion and the coupling of connection fly springs 5 is provided. Figure 4 and figure 5 show the tongues 12 for fixing to the support base 2.

The rear portion of the packet body 3 is divided by walls 15 in at least three rooms 16, two of which have the position and the dimensions suitable for the insertion of the profiles 10 of the support base 2.

The front portion of the upper side and of the lower side of the packet body 3 is provided with a serie of slits 17, in correspondence of the obliged path of the insulated conductors making up the circuits. Said obliged path are defined by means of paths 18 provided both on upper side and the lower side of the packet body 3, said paths starting from a lateral border of the upper side and from the opposed lateral border of the lower side and ending on the front border of said sides, in correspondence of said slits 17. In particular, said paths 18 are divided by reliefs 29 constituting the lateral walls of each path 18. The upper side and the lower side of the packet body 3 are further provided with a plurality of pins 19, male coupling with correspondent openings 20 of the box-lid 4.

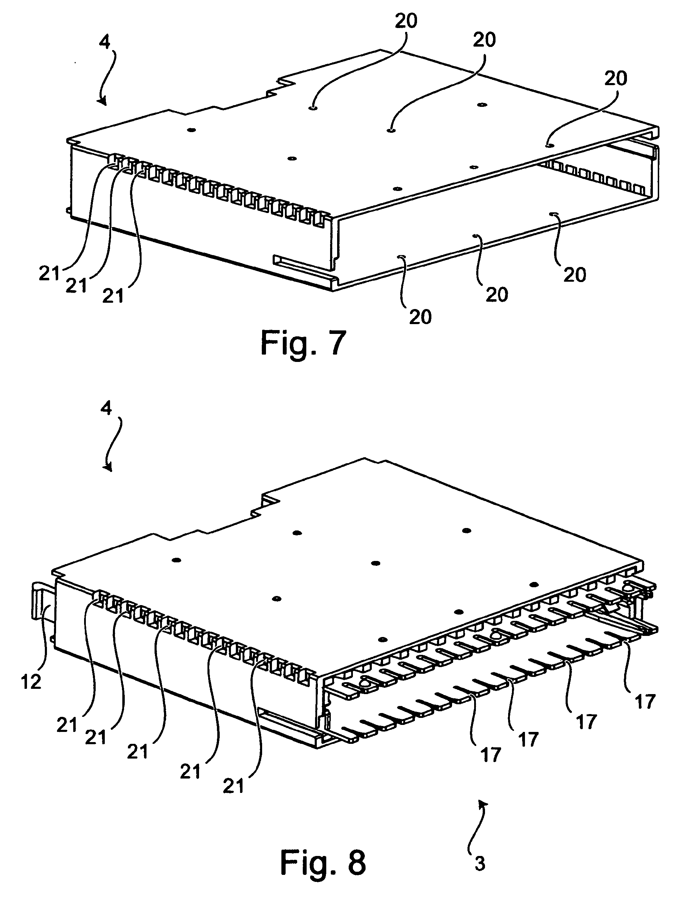

Reference being made to figures 7 and 8, the box-lid 4, fully made from molding in plastic material, is shaped as a box opened on the front side and on the rear side. As previously said, the box-lid 4 is provided with a plurality of openings 20 serving as seat for the pins 19 of the upper and lower side of the packet body 3. The form and dimensions of the box-lid 4 must be such to allow the insertion of the packet body 3.

On the lateral sides of the box-lid 4 a plurality of openings 21 is provided, in order to allow the passage of the single insulated conductors of the circuits heading to the paths 18 on the side of the packet body 3.

When the packet body 3 is fully inserted inside the relative box-lid 4, the top of reliefs 29 is in contact with the internal surface of the box-lid 4. The obliged path of the insulated conductors making up the circuits therefore have the peculiarity of being fully closed on the side, respectively defined by the path 18, the lateral walls defined by the reliefs 29 close to the path 18 and the surface of the box-lid 4.

In order to ensure the absence of cross talk even inside the IDC strip, it is therefore made use of this feature of the obliged path of the insulated conductors making up the circuits, by realising a superficial metalization of the paths 18, of the reliefs 29 defining its lateral walls and of the internal surfaces of box body 4.

Such superficial metalization realises an electromagnetic shield of each single obliged path of the conductors, suitably closed when the packet is fully assembled, i.e. when the packet body 3 is fully inserted inside the box-lid 4.

It is further possible to realise an equipotential node of all the shields of the obliged path of the single packets composing the IDC strip, by means of the tongues 12 and the common metalization of the holes 11 of the front surface of the support base 2.

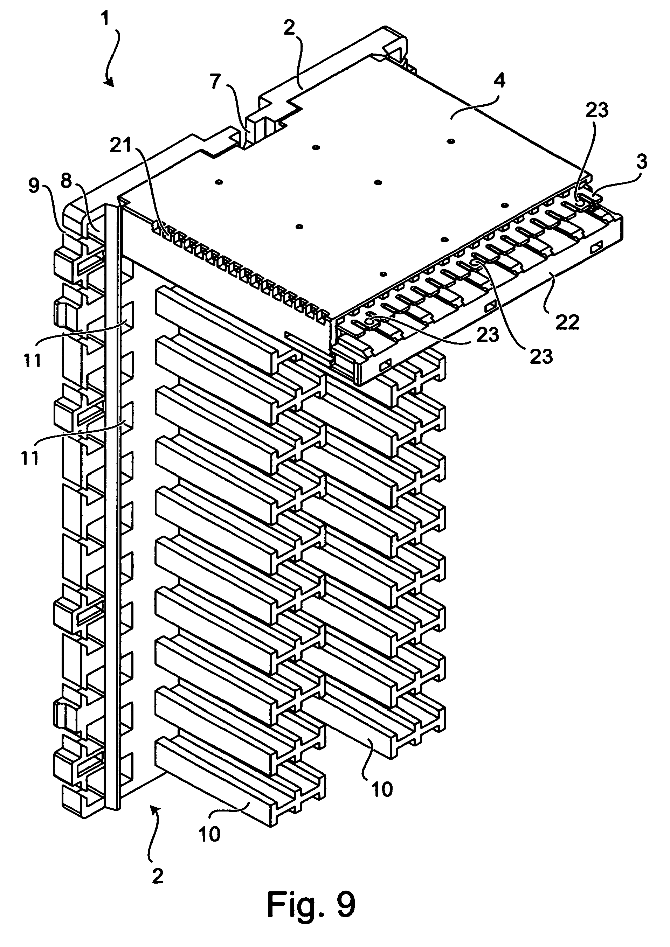

Figure 9 shows a support base 2, on which a single packet body 3 is placed, inside the corresponding box-lid 4. The front portion of the lower side of the packet body 3 is covered by a front case 22, fully made from molding in plastic material, having the same features of the cases according to the prior art. The coupling of the case 22 with the packet body 3 is ensured by a fixing system, making use of a plurality of pins 23, the figure showing three of them.

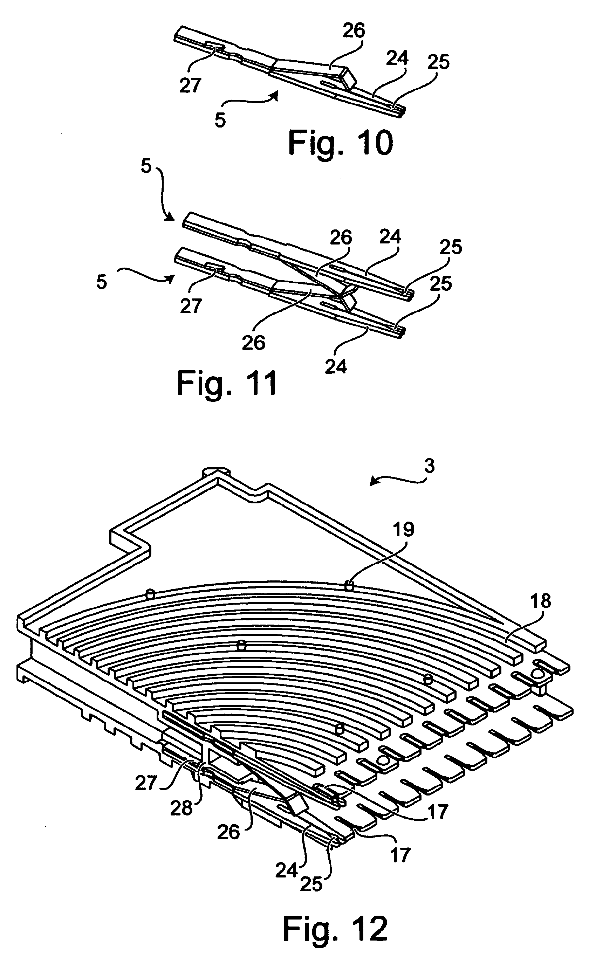

Finally, reference being made to figures 10, 11 and 12, a connection fly spring 5, according to the present invention, is made of copper provided with beryllium and is comprised of two part, a harm 24 having a slot 25 for the connection of the conductor and an elastic element 26 for contacting with a second fly spring of the same kind. On the rear portion of the body of the fly spring 5 a tongue 27 is provided, for tongue coupling with a tooth 28 provided in each seat 14 for the insertion and the coupling of the fly springs 5 in packet body 3. The tongue 27 is integral with the elastic element 26, so that it is possible, acting on the elastic element 26, to obtain the coming back of the tongue 27 and the extraction of the fly spring 5 from the seat 14.

The connection fly springs 5 are placed on the seat 14 of the packet body 3 by simple insertion, they are fixed in the seat 14 of the packet body 3 by fix coupling and are arranged in couples, the elastic element 26 of each of them securing contact with the elastic element of a second fly spring of the same kind, in order to realise the contact continuity of the circuit. The connection fly spring 5, according to the present invention, can be easily removed and substituted with another if needed.

The advantags of a termination module, and in particular of an IDC strip, according to the present invention are evident. In fact, the lateral entry of the cables to be connected one to the other and their coupling on the front portion of the strip make easy the operations of access for the circuit operators, saving room on the overall lateral dimensions of the strip.

Further, the possibility of connecting together the cables coming from the private lines and from the main station in correspondence of the front portion of the strip and and of acceding to the contacts in a simple manner, decrease the need for intervening on the strip by means of displacement of each packet body.

Further, the embodiment of the support base 2 and in particular of its coupling componets with each packet body 3, together with that of the corresponding portions of the packet body 3, ensure a good sturdiness to the structure of the IDC strip.

Finally, the ways of arranging the connection fly springs 5, and the possibility of substituting them with new fly springs, make easy the operations of managing and maintaining the strip.

The present invention was described for illustrative non limitative purposes, according to its preferred embodiments, but it has to be understood that variation and/or modification can be made by those skilled in the art without for this reason being outside from the scope of protection, as defined by the enclosed claims.

## Claims

1. Termination module for couples of semiconductors, in particular an IDC strip (1), comprising at least one packet body (3), placed on a support base (2), and covered by a box-lid (4), on which a plurality of connection fly springs (5) are arranged, the cables of the conductors coming from the telephone private lines and the cables coming from the main station entering the module from opposed side of each packet body (3) and being led, through a plurality of obliged paths, towards the front portion of said packet body (3), in correspondence of a slot (25) of each of said connection fly springs (5) of the conductor, **characterised in that** the front side of said support base (2) is provided with
- a plurality of raised profiles (10), arranged to form at least two vertically ordered series inside the two lateral half-portion of the support base (2), each couple of profiles (10) being at the same height of the two series constituting cantilevers for the support of each packet body (3), through insertion in correspondent rooms (16), provided on the rear portion of each packet body (3), opened on the rear side and delimited by walls (15), and
- a plurality of openings (11), arranged to form two vertically ordered series, each couple of openings (11) being at the same height of the two series co-operating to the tonguing coupling with correspondent fixing tongues (12) provided on the rear side of each packet body (3).

2. Termination module according to claim 1, **characterised in that** said obliged path are electromagnetically shielded one from the other, by means of lateral enclosure and metalization.

3. Termination module according to any of the previous claims, **characterised in that** at the sides of said support base (2) a plurality of slots (8) for the passage and the support of the cables of the conductors heading to the module is provided.

4. Termination module according to any of the previous claims, **characterised in that** said support base develops flat, is provided, on the rear side, with stiffening ribs (6) and is fully made by metalized plastic material molding by means of a superficial treatment with a modified paint, made electrically conductive.

5. Termination module according to any of the previous claims, **characterised in that** said at least one packet body (3) has a box like structure opened on the front and the rear side, inside which, in correspondence of approximately half of its depth and all along its width, a plurality of seats (14) for the insertion and the coupling of connection fly springs (5) is provided.

6. Termination module according to any of the previous claims, **characterised in that** on the upper side and on the lower side of each packet body (3) are defined by means of raised walls a plurality of curved paths (18) for the cables of conductor, starting from a lateral border of said upper side and from the opposed lateral border of said lower side and ending on the front border of said sides, each in correspondence of a slit (17), for fixing the end of said cables, in correspondence of the slot (25) of each connection fly spring (5).

7. Termination module according to any of the previous claims, **characterised in that** the upper side and the lower side of each packet body (3) are provided with pins (19) for coupling with corresponding openings (20) of the box-lid (6).

8. Termination module according to any of the previous claims, **characterised in that** said at least one packet body (3) is fully realised by metalized plastic material molding by means of superficial treatment with a modified paint, made electrically conductive.

9. Termination module according to any of the previous claims, **characterised in that** said box-lid (4) is shaped as a box opened on the front side and on the rear side, on the upper side and on the lower side of the box-lid (4) being provided a plurality of openings (20) coupling with pins (19) of the upper and lower side of a packed body (3), on the lateral sides of the box-lid (4) being provided a plurality of openings (21) for the passage of the single insulated conductors of the circuits heading to the paths (18) on the front side of the packet body (3).

10. Termination module according to any of the previous claims, **characterised in that** said box-lid (4) is fully realised by metalized plastic material molding by means of superficial treatment with a modified paint, made electrically conductive.

11. Termination module according to any of the previous claims, **characterised in that** said connection fly springs (5) are each constituted by a harm (24) with a slot (25) for the connection of the conductor and by an elastic element (26) for contacting with a second fly spring of the same kind, each fly spring (5) being inserted in a corresponding seat (14) for coupling in the packet body (3).

12. Termination module according to claim 11, **characterised in that** on the rear portion of the body of said fly spring (5) a tongue is provided (27), for tongue coupling with a tooth (28) provided in each seat (14) of the packet body (3).

13. Termination module according to any of the previous claims, **characterised in that** said connection fly springs (5) are made of copper provided with beryllium.

## Patentansprüche

1. Anschlussmodul für Paare von Halbleitern, insbesondere einen IDC-Streifen (1), umfassend mindestens einen Gehäusekörper (3), der auf einer Halterungsbasis (2) angeordnet und durch einen Gehäusedeckel (4) zugedeckt ist, auf dem eine Vielzahl von Verbindungsschlitzfedern (5) angeordnet ist, wobei die von den privaten Telefonleitungen kommenden Kabel der Leitungen und die von der Hauptstation kommenden Kabel von gegenüberliegenden Seiten jedes Gehäusekörpers (3) in das Modul eintreten und entsprechend einem Steckanschluss (25) jeder der Verbindungsschlitzfedern (5) der Leitung zu dem Frontabschnitt des Gehäusekörpers (3) durch eine Vielzahl von vorgeschriebenen Pfaden geführt werden, **dadurch gekennzeichnet, dass** die Vorderseite der Halterungsbasis (2) versehen ist mit
- einer Vielzahl von erhöhten Profilen (10), die angeordnet sind, um mindestens zwei vertikal angeordnete Reihen innerhalb der beiden seitlichen Hälften der Halterungsbasis (2) zu bilden, wobei jedes Paar der Profile (10) auf der selben Höhe ist wie die beiden Reihen und Träger bildet für die Halterung jedes Gehäusekörpers (3) durch Einführen in entsprechende Räume (16), die an dem rückwärtigen Abschnitt jedes Gehäusekörpers (3) vorgesehen sind und die an der Rückseite geöffnet und durch Wände (15) begrenzt sind, und
- einer Vielzahl von Öffnungen (11), die angeordnet sind, um zwei vertikal angeordnete Reihen zu bilden, wobei jedes Paar der Öffnungen (11) auf derselben Höhe ist wie die beiden Reihen, die mit der Zungenverbindung zusammenwirken mit entsprechenden Befestigungszungen (12), die an der Rückseite jedes Gehäusekörpers (3) vorgesehen sind.

2. Anschlussmodul gemäß Anspruch 1, **dadurch gekennzeichnet, dass** die vorgeschriebenen Pfade elektromagnetisch voneinander abgeschirmt sind durch eine seitliche Kapselung und Metallisierung.

3. Anschlussmodul gemäß einem der vorangehenden Ansprüche, **dadurch gekennzeichnet, dass** an den Seiten der Halterungsbasis (2) eine Vielzahl von Schlitzen (8) vorgesehen ist für die Durchführung und die Halterung der Kabel der zu dem Modul führenden Leitungen.

4. Anschlussmodul gemäß einem der vorangehenden Ansprüche, **dadurch gekennzeichnet, dass** die Halterungsbasis flach ausgeführt ist und auf der Rückseite mit Versteifungsrippen (6) versehen ist und vollständig durch metallisiertes Kunststoffmaterialformen hergestellt ist durch eine oberflächliche Behandlung mit einem modifizierten, elektrisch leitend gemachten Lack.

5. Anschlussmodul gemäß einem der vorangehenden Ansprüche, **dadurch gekennzeichnet, dass** der mindestens eine Gehäusekörper (3) eine Box-artige Struktur aufweist, die an der Front- und der Rückseite geöffnet ist und in der ungefähr entsprechend der halben Tiefe und entlang ihrer Breite eine Vielzahl von Sitzen (14) für die Einführung und die Verbindung von Anschlussschlitzfedern (5) vorgesehen ist.

6. Anschlussmodul gemäß einem der vorangehenden Ansprüche, **dadurch gekennzeichnet, dass** an der Oberseite und an der Unterseite jedes Gehäusekörpers (3) eine Vielzahl von gekrümmten Pfaden (18) für die Kabel der Leitungen mittels angehobener Wände definiert ist, beginnend von einer seitlichen Grenze der Oberseite und von der gegenüberliegenden seitlichen Grenze der Unterseite und endend an der vorderen Grenze der Seiten jeweils entsprechend einem Schlitz (17) zur Fixierung der Kabelenden entsprechend dem Steckanschluss (25) jeder der Verbindungsschlitzfedern.

7. Anschlussmodul gemäß einem der vorangehenden Ansprüche, **dadurch gekennzeichnet, dass** die Oberseite und die Unterseite jedes Gehäusekörpers (3) mit Stiften (19) versehen ist zur Verbindung mit entsprechenden Öffnungen (20) des Gehäusedeckels (6).

8. Anschlussmodul gemäß einem der vorangehenden Ansprüche, **dadurch gekennzeichnet, dass** der mindestens eine Gehäusekörper (3) vollständig realisiert ist durch metallisiertes Kunststoffmaterialformen mittels einer oberflächlichen Behandlung mit einem modifizierten Lack, der elektrisch leitfähig gemacht ist.

9. Anschlussmodul gemäß einem der vorangehenden Ansprüche, **dadurch gekennzeichnet, dass** der Gehäusedeckel (4) als ein Gehäuse geformt ist, das an der Vorderseite und an der Rückseite geöffnet ist und an der Oberseite und an der Unterseite des Gehäusedeckels (4) mit einer Vielzahl von Öffnungen (20) versehen ist, die ankoppeln an Stifte (19) der Ober- und Unterseite des Gehäusekörpers (3), und der an den seitlichen Seiten des Gehäusedeckels (4) mit einer Vielzahl von Öffnungen (21) versehen ist zur Durchführung der einzelnen isolierten Leiter der Schaltungen, die zu den Pfaden (18) an der Vorderseite des Gehäusekörpers (3) führen.

10. Anschlussmodul gemäß einem der vorangehenden Ansprüche, **dadurch gekennzeichnet, dass** der Gehäusedeckel (4) vollständig realisiert ist durch metallisiertes Kunststoffmaterialformen mittels einer oberflächlichen Behandlung mit einem modifizierten Lack, der elektrisch leitend gemacht ist.

11. Anschlussmodul gemäß einem der vorangehenden Ansprüche, **dadurch gekennzeichnet, dass** die Verbindungsschlitzfedern (5) jeweils bestehen aus einem Arm (24) mit einem Schlitz (25) für die Verbindung des Leiters und einem elastischen Element (26) zur Kontaktierung einer zweiten Schlitzfeder derselben Art, wobei jede Schlitzfeder (5) in einen entsprechenden Sitz (14) eingeführt wird zur Verbindung mit dem Gehäusekörper (3).

12. Anschlussmodul gemäß Anspruch 11, **dadurch gekennzeichnet, dass** an dem rückwärtigen Abschnitt des Körpers der Schlitzfeder (5) eine Zunge (27) vorgesehen ist für eine Zungenkopplung mit einem Zahn (28), der in jedem Sitz (14) des Gehäusekörpers (3) vorgesehen ist.

13. Anschlussmodul gemäß einem der vorangehenden Ansprüche, **dadurch gekennzeichnet, dass** die Verbindungsschlitzfedern (5) aus Kupfer bestehen, das mit Beryllium versehen ist.

## Revendications

1. Module de terminaison pour couples de semi-conducteurs, en particulier une bande IDC (1), comprenant au moins un corps de paquet (3), placé sur une base de support (2) et couvert par un couvercle de boîtier (4), sur lequel une pluralité de ressorts à lames de connexion (5) sont agencés, les câbles des conducteurs provenant des lignes téléphoniques privées et les câbles provenant de la station principale entrant dans le module à partir de côtés opposés de chaque corps de paquet (3) et étant acheminés, par une pluralité de trajets obligés, vers la partie avant dudit corps de paquet (3), correspondant à une fente (25) de chacun desdits ressorts à lames de connexion (5) du conducteur, **caractérisé en ce que** le côté avant de ladite base de support (2) est muni :
- d'une pluralité de profils surélevés (10) agencés de manière à former au moins deux séries ordonnées verticalement à l'intérieur des deux demi-portions latérales de la base de support (2), chaque couple de profils (10) étant à la même hauteur des deux séries en porte-à-faux pour soutenir chaque corps de paquet (3), par insertion dans des chambres correspondantes (16), prévues sur la partie arrière de chaque corps de paquet (3), ouvertes sur le côté arrière et délimitées par des parois (15), et
- une pluralité d'ouvertures (11), agencées de manière à former deux séries ordonnées verticalement, chaque couple d'ouvertures (11) étant à la même hauteur des deux séries coopérant au couplage par languette avec des languettes de fixation correspondantes (12) prévues sur le côté arrière de chaque corps de paquet (3).

2. Module de terminaison selon la revendication 1, **caractérisé en ce que** lesdits trajets obligés sont isolés électromagnétiquement les uns des autres à l'aide d'une enceinte latérale et par métallisation.

3. Module de terminaison selon l'une quelconque des revendications précédentes, **caractérisé en ce que,** au niveau des côtés de ladite base de support (2), une pluralité de fentes (8) destinées au passage et au soutien des câbles des conducteurs allant vers le module est prévue.

4. Module de terminaison selon l'une quelconque des revendications précédentes, **caractérisé en ce que** ladite base de support est plate et est munie, sur le côté arrière, de nervures de raidissement (6) et est entièrement fabriquée par moulage d'un matériau plastique métallisé à l'aide d'un traitement superficiel par peinture modifiée rendue électriquement conductrice.

5. Module de terminaison selon l'une quelconque des revendications précédentes, **caractérisé en ce que** ledit au moins un corps de paquet (3) a une structure de type boîtier ouvert à l'avant et à l'arrière, à l'intérieur duquel, sur environ la moitié de sa profondeur et sur toute sa largeur, sont prévues une pluralité d'assises (14) destinées à l'insertion et au couplage des ressorts à lames de connexion (5).

6. Module de terminaison selon l'une quelconque des revendications précédentes, **caractérisé en ce que** sur le côté supérieur et sur le côté inférieur de chaque corps de paquet (3) sont définis à l'aide de parois surélevées une pluralité de trajets incurvés (18) pour les câbles de conducteur, commençant au niveau de la délimitation latérale dudit côté supérieur et de la délimitation latérale opposée dudit côté inférieur et se terminant sur la délimitation avant desdits côtés, chacun correspondant à une fente (17), pour fixer l'extrémité desdits câbles en correspondance avec la fente (25) de chaque ressort à lames de connexion (5).

7. Module de terminaison selon l'une quelconque des revendications précédentes, **caractérisé en ce que** le côté supérieur et le côté inférieur de chaque corps de paquet (3) sont munis de tiges (19) destinées à être couplées avec des ouvertures correspondantes (20) du couvercle de boîtier (6).

8. Module de terminaison selon l'une quelconque des revendications précédentes, **caractérisé en ce que** ledit au moins un corps de paquet (3) est entièrement fabriqué par moulage de matériau plastique métallisé à l'aide d'un traitement superficiel avec une peinture modifiée rendue électriquement conductrice.

9. Module de terminaison selon l'une quelconque des revendications précédentes, **caractérisé en ce que** ledit couvercle de boîtier (4) a la forme d'un boîtier ouvert à l'avant et à l'arrière, sur le côté supérieur et sur le côté inférieur du couvercle de boîtier (4) étant prévues une pluralité d'ouvertures (20) couplées aux tiges (19) des côtés supérieur et inférieur d'un corps de paquet (3), sur les côtés latéraux du couvercle de boîtier (4) étant prévues une pluralité d'ouvertures (21) pour le passage des conducteurs isolés uniques des circuits allant vers les trajets (18) sur le côté avant du corps de paquet (3).

10. Module de terminaison selon l'une quelconque des revendications précédentes, **caractérisé en ce que** ledit couvercle de boîtier (4) est entièrement fabriqué par moulage de matériau plastique métallisé à l'aide d'un traitement superficiel avec une peinture modifiée rendue électriquement conductrice.

11. Module de terminaison selon l'une quelconque des revendications précédentes, **caractérisé en ce que** lesdits ressorts à lames de connexion (5) sont chacun constitués d'un bras (24) muni d'une fente (25) destiné à la connexion du conducteur et d'un élément élastique (26) destiné à entrer en contact avec un second ressort à lames du même type, chaque ressort à lames (5) étant inséré dans une assise correspondante (14) pour effectuer un couplage dans le corps de paquet (3).

12. Module de terminaison selon la revendication 11, **caractérisé en ce que** sur la partie arrière du corps dudit ressort à lames (5) une languette est prévue (27), pour opérer un couplage par languette avec une dent (28) prévue dans chaque assise (14) du corps de paquet (3).

13. Module de terminaison selon l'une quelconque des revendications précédentes, **caractérisé en ce que** lesdits ressorts à lames de connexion (5) sont constitués de cuivre enrichi de béryllium.
